# EUROPEAN PATENT SPECIFICATION

(11) **EP 4 227 172 B1**
(45) Date of publication and mention of the grant of the patent: **24.12.2025**
(21) Application number: 22156767.0
(22) Date of filing: 15.02.2022
(51) Int. Cl.: B60T 8/17, B60T 13/68, B60T 7/20, B60T 8/32

(54) **TRAILER CONTROL MODULE AND TRAILER CONTROL VALVE ARRANGEMENT**
ANHÄNGERSTEUERMODUL UND ANHÄNGERSTEUERVENTILANORDNUNG
MODULE DE COMMANDE DE REMORQUE ET AGENCEMENT DE SOUPAPE DE COMMANDE DE REMORQUE

(43) Date of publication of application: 16.08.2023
(73) Proprietor: ZF CV Systems Europe BV, 1170 Brüssel (BE)
(72) Inventor: DRELICH, Lukasz, 42-215 Czestochowa (PL); SMARDZ, Marek, 67-400 Wschowa (PL); TYMOSZYK, Mateusz, 54-206 Wroclaw (PL)
(74) Representative: Ohlendorf, Henrike

(56) References cited:
- US-A1- 2020 079 341
- US-A1- 2020 139 952

## Description

The invention relates to an trailer control module for an electropneumatic braking system of a tractor vehicle / trailer combination, in particular commercial vehicle combination, the trailer control module comprising: a supply connection for providing a supply pressure; a trailer supply port for delivering a trailer supply pressure to a trailer supply connection; a trailer working port for delivering a trailer control pressure to a trailer control connection; and a trailer control valve arrangement at least connected to the supply connection and configured for receiving the supply pressure and for providing the trailer control pressure to the trailer working port. The trailer control valve arrangement comprises an electro-pneumatic pilot control unit for receiving electronic trailer braking signals and transforming the electronic trailer braking signals into a pilot control pressure. Furthermore, the trailer control valve arrangement comprises a relay valve unit for receiving the supply pressure and the pilot control pressure, wherein the relay valve unit is configured for providing the trailer control pressure dependent on the pilot control pressure. The trailer control valve arrangement further comprises a breakaway valve unit configured to switch between a supply state for enabling fluid communication of the supply connection and the relay valve unit and a breakaway state for throttling fluid communication of the supply connection and the relay valve unit.

Vehicles, in particular commercial vehicles, are regularly equipped with pneumatic braking systems. In a vehicle combination of a tractor vehicle and a trailer (tractor vehicle / trailer combination) pressurized air and brake signals are supplied from the tractor vehicle to the trailer. Pressurized air is supplied to the trailer via a trailer supply line and pneumatic control signals are transmitted via a control line. For connecting the supply and control lines of a trailer, the pneumatic braking systems of the tractor vehicle usually has two coupling heads.

In the electronically controlled braking system, the trailer control valve module controls the pressure at the coupling heads - and thus the braking behavior of the trailer - by providing an output pressure. It receives electrical signals from the main electronic control unit (mECU) indicating an output pressure request. The central module effects both the electrical actuation and monitoring of the trailer control valve module.

If, for example, during braking the trailer brake control line breaks, the breakaway valve arrangement switches from a supply state to a working state and thereby throttles the supply of the relay valve unit in the trailer control module. This causes a pressure drop at supply port (trailer supply line) and the relay valve arrangement causes the trailer to be braked automatically, due to pressure drop in the trailer supply line.

The switching of the breakaway valve is pneumatic driven, wherein at least the supply pressure in combination with the trailer control pressure or the pilot control pressure instead controls the switching of the breakaway valve. In both cases quality issues regarding the sealing influence the supply pressure, as for example the rubber compound resulting in increased friction coefficient and sensitivity to supply pressure level.

However, due to legal regulations the tractor protection functionality needs to be ensured. To achieve a higher accuracy in automatic braking due to a breakaway of trailer control line, more reliable and stable working conditions for the activation of the breakaway valve unit have to be provided.

On a different note, US2020139952A1 and US2020079341A1 disclose an electropneumatic control module with a combination of a trailer control unit and an immobilizing brake unit.

Furthermore, there is a need for an economical system that uses cost-efficient components and that is easy to install into a braking system.

In a first aspect to solve this object, the present invention proposes a trailer control module of the aforementioned type characterized in that the breakaway valve unit includes a switching member having a first control face subjected to a first pressure force defined by the pilot control pressure and a second control face subjected to a second pressure force counteracting the first pressure force and defined by at least the trailer control pressure, wherein the first pressure force and the second pressure force are balanced in the supply state and the switching member is configured to be switched from the supply state to the breakaway state, in case of the second pressure force falling below a predetermined threshold.

Preferably, the predetermined threshold is equal to the first pressure force, such that the switching member switches from the supply state to the breakaway state in case of the second pressure force falling below the first pressure force. During operation, the second pressure force, which is defined by the trailer control pressure, will fall in cases of breakaway of the trailer control line. Since the first pressure force counteracting with the second pressure force is defined by at least the pilot control pressure and optional other forces, e.g. a resilient force of a spring, the switching of the breakaway valve unit is independent from the supply pressure. The inventors advantageously recognized that the supply pressure is sensitive to the quality of the sealing materials and material combinations as well as to the operating conditions. The trailer control pressure as well as the pilot control pressure are less subjected to quality issues and especially the resistance of the sealings. Thus, a more reliable breakaway valve module is provided allowing stable working conditions. Thereby, the failure-proneness of the breakaway valve unit is reduced. Overall reliability and/or safety provided by the trailer control module can be increased.

It will be understood that such a trailer control module can be used either for an electropneumatic braking system or an anti-lock braking system.

Preferably, the trailer control module further comprises a throttling port in fluid connection with the breakaway valve unit, wherein the breakaway valve unit throttles the supply of supply pressure to the relay valve unit in the breakaway state via the throttling port. Thus, the breakaway valve unit can easily guide the amount of pressurized air provided by the supply connection that cannot be guided through the breakaway valve unit via the additional throttling port either to another unit or to a pneumatic circuit or vent the pressurized air to the environment.

In a preferred embodiment, the breakaway valve unit further has a resilient member configured to apply a retention force to the second control face, wherein the second pressure force F2 is defined by the pilot control pressure and the retention force. Such a resilient member advantageously biases the switching member toward a position allowing the breakaway valve unit to maintain in the supply state to ensure the supply in the event of pressure variations during operation. The breakaway valve unit is configured to switch into the breakaway state in case the second pressure force F2 falls below the predetermined threshold TB that is preferably equivalent to the first pressure force defined by the trailer control pressure and the retention force applied by the resilient member.

Preferably, the breakaway valve unit has a valve unit casing at least partly defining a flow path from the supply connection to the relay valve unit. It is further preferred that the switching member is movable received in the valve unit casing for switching from the supply state to the breakaway state, wherein the switching member is preferably arranged in the flow path and configured for selectively blocking the flow path in the breakaway state. In this embodiment, the switching function of the breakaway valve unit is at least partially provided by the switching member arranged in the valve unit casing. Through this, a particularly robust, cheap and simple breakaway function is achieved. Preferably, the switching member is a piston slidably arranged in the valve unit casing, wherein the first control face is provided by a first end of the piston and the second control face is provided by a second opposing end of the piston. Preferably, the piston further has a central portion arranged in the flow path. Thus, the supplied air pressurized with the supply pressure can flow around the central portion. The first and second control face provided by the opposing ends of the piston are simple to manufacture and thus allow a cheap and robust breakaway valve function. It will be understood that the first control face and the second control face are preferably fluid-tightly separated from each other such that the first control face is exposed only to the pilot control pressure and the second control face is exposed only to the trailer control pressure.

It is further preferred that the breakaway valve unit casing has a valve seat and the central portion has a corresponding valve body, wherein the valve body is configured to rest against the valve seat in the breakaway state. A valve seat and a corresponding valve body allow a simple throttling mechanism. In the absence of sealings associated to the valve seat, a defined amount of pressurized air will pass the valve seat and will be supplied to the relay valve unit, such that the supply is throttled. Preferably, the valve seat is provided by an internal wall of the valve unit casing.

Preferably, the breakaway valve unit further has a sealing ring associated to the valve seat, such that the supply of supply pressure to the relay valve unit from the supply connection may be prevented in the breakaway state.

In a further preferred embodiment, the valve unit casing further has a breakaway valve supply port for receiving supply pressure from the supply connection, a breakaway valve control port for receiving pilot control pressure from the pilot valve unit, a breakaway valve working port for providing supply pressure in the supply state to the relay valve unit, and a check port in fluid connection with the trailer working port for receiving control pressure.

Preferably, the resilient member is a spring engaged with a corresponding protrusion provided by the second control face and a corresponding recess provided by the valve unit casing. A spring provides an appropriate resilient member and by having a guiding provided by a protrusion and a corresponding recess, a retention force can be applied to the switchable member in a repeatable and reliable manner. Thus, the switching member is securely biased toward the supply state to ensure the supply of supply pressure from the supply connection to the relay valve unit.

It is further preferred, that the first control face is fluid-tightly separated from the second control face by at least one sealing ring. Thus, the breakaway function is more reliable. In particular, when having a switching member provided by a slidable piston, slidably received in a corresponding part of the valve unit casing, a sealing ring is appropriate to sealingly rest against the shell surface of the piston. It is further preferred that a first sealing ring is provided between the central portion and the first end of the piston and a second sealing ring is provided between the central portion and the second end of the piston.

Preferably, the electropneumatic pilot control unit is configured for signal communication with an electronic control unit of an electronic braking system for receiving the electronic braking signals. Thus, the trailer control module may be integrated in the electric circuit of an electronic braking system which may be a main electronic control unit of the electronic braking system of the vehicle.

Preferably, the trailer control module further comprises a pressure sensor configured to monitor the trailer control pressure and to provide a pressure signal to the electronic control circuit. Thus, the trailer control module may allow the electronic braking system to control the trailer braking function based on the detected sensor signals regarding the output trailer control pressure, in particular provided at the trailer working port. In a preferred embodiment, the electropneumatic pilot control unit comprises a first electropneumatic control valve, a second electropneumatic control valve and a third electropneumatic control valve. Preferably, the first electropneumatic control valve is configured to receive a supply pressure and to provide the pilot control pressure, preferably via a first valve working port, dependent on one or more trailer braking control signals provided to the first electropneumatic control valve by an electronic trailer control connection. The first electropneumatic control valve is preferably a solenoid valve, formed by an electropneumatic 2/2-way valve. The second electropneumatic control valve is preferably biased to a closed position, wherein in the closed position a fluid passage between an electropneumatic supply port and an electropneumatic working port of the second electropneumatic control valve are blocked. The second electropneumatic control valve is preferably a solenoid valve formed as an electropneumatic 2/2-way valve providing an output pressure to the pilot control unit. The third electropneumatic control valve is preferably a solenoid valve formed as an electropneumatic 3/2-way valve that is connected to a redundancy port of the trailer control module.

Preferably, the trailer control module further comprises an electronic trailer control connection for receiving electronic braking signals and providing respective trailer braking signals at the trailer control valve arrangement such that the trailer control pressure can be modulated. Thus, in particular the pilot control unit receives modulated trailer control signals for transforming said signals into a pilot control pressure.

In an alternative preferred embodiment, the trailer control module is an electrically controlled trailer control module. Thus, the trailer control valve arrangement may be electrically controlled.

According to a second aspect of the invention, the above stated problem is solved by an electropneumatic braking system for a tractor vehicle of a tractor vehicle / trailer combination, in particular a commercial vehicle combination, comprising: at least a first brake circuit including brake actuators for braking the tractor vehicle; one or more compressed air supplies; and a trailer control circuit comprising a supply coupling head, a control coupling head and an trailer control module according to the first aspect of the invention. By having an trailer control module according to the first aspect of the invention, the electropneumatic braking system incorporates the benefits of the first aspect. Preferred embodiments and benefits of the first aspect of the invention are also preferred embodiments and benefits of the second aspect of the invention and vice versa. The supply connection of the trailer control module and the external control module may be connected to the same compressed air supplies of the electro-pneumatic braking system or to one or more different air supplies. For example, the supply connection and the external control valve may both be connected to a first air supply while only the external control valve is connected to a second air supply.

A third aspect of the invention is defined in method claim 15.
By switching the breakaway valve unit between a supply state and a breakaway state by means of a switching member which switches to the breakaway state in case of the second pressure force falling below a predetermined threshold, the method according to the third aspect incorporates the benefits of the first aspect.

For a more complete understanding of the invention, the invention will now be described in detail with reference to the accompanying drawings. The detailed description will illustrate and describe what is considered as preferred embodiments of the invention. The wording "comprising" or "including" does not exclude other elements or steps. The word "a" or "an" does not exclude the plurality. The wording "a number of" items comprising also the number 1, i.e. a single item, and further numbers like 2, 3, 4 and so forth.

In the accompanying drawings:
Fig. 1 shows a schematic layout of a vehicle having an electropneumatic braking system;
Fig .2 shows an electropneumatic trailer control module; and
Fig. 3 shows a breakaway valve unit of the electropneumatic trailer control module shown in Fig. 2.

A tractor vehicle 200, in particular a commercial vehicle 202, comprises a front axle FA and preferably a rear axle RA. The vehicle 200 is a tractor vehicle of a tractor vehicle / trailer combination (trailer not shown). For braking the front axle FA and the rear axle RA the tractor vehicle 200 comprises an electropneumatic braking system 100.

The electropneumatic braking system 100 comprises a first brake circuit 102, which here is a front axle brake circuit 104 for the front axle FA, and preferably a second brake circuit 106, which here is a rear axle brake circuit 108 for the rear axle RA. Furthermore, the electropneumatic braking system 100 comprises a trailer control circuit 110. For providing compressed air at a supply pressure pS, the electropneumatic braking system 100 comprises a first compressed air supply 112.

In this embodiment the first compressed air supply 112 supplies the first brake circuit 102 and preferably the electropneumatic braking system 100 may further has an external control valve 114 which may be formed as a dash valve 116 and to which the air is provided.

The second brake circuit 106 is supplied by a second compressed air supply 118, which also provides compressed air at the supply pressure pS. However, it is also preferred that the first compressed air supply 112 or the second compressed air supply 118 supplies the first or second brake circuit 102, 106, only. Compressed air is provided to the first and second compressed air supplies 112, 118 by an air treatment system, which is not shown.

The electropneumatic braking system 100 includes a main electronic control unit 120, which is also referred to as mECU, for controlling its elements. The mECU in particular controls a rear axle modulator 122 provided for the rear axle RA. In this embodiment, the rear axle modulator 122 and mECU 120 are formed as a control unit 124. A front axle modulator 126 is connected to first and second front axle ABS-modules 128a, 128b which in turn are connected to front axle brake actuators 130a,130b. The front axle modulator 126 is pneumatically connected to a foot brake module 132. In this embodiment, the foot brake module 132 is formed as an electropneumatic foot brake module 134. Upon actuation (represented by arrow 136) by a user or upon electronic actuation by an actuator (not shown) the foot brake module 134 provides a front axle braking pressure pBFA to the front axle modulator 126.

The foot brake module 132 is further connected to the mECU 120 via a foot brake signal line 138. Upon actuation the foot brake module 132 provides foot brake signals SFB proportional to the actuation. The mECU 120 provides rear axle brake signals SRA to the rear axle modulator 122 which then provides a corresponding rear axle braking pressure pBRA to rear axle brake actuators 140a, 140b, 140c, 140d of the rear axle RA. The rear axle brake actuators 140a, 140b, 140c, 140d are formed as tristop-cylinders providing a service braking function as well as a park braking function. When the rear axle braking pressure pBRA is supplied to the rear axle brake actuators 140a, 140b, 140c, 140d the tristop-cylinders are closed for braking the rear axle RA. The parking brake portion of the rear axle brake actuators 140a, 140b, 140c, 140d is configured for braking the rear axle RA of the vehicle 200 in a non-pressurized state.

During a drive of the vehicle 200 a park braking pressure pBPB is supplied to the rear axle brake actuators 140a, 140b, 140c, 140d. When the park braking pressure pBPB is supplied spring elements (not shown) of the rear axle brake actuators rear axle brake actuators 140a, 140b, 140c, 140d are opened an the rear axle RA is ready for driving.

The park braking pressure pBRP is provided to the rear axle brake actuators 140a, 140b, 140c, 140d by a park brake module 142 which is in fluid communication with the external control valve 114 via protection line 144. The park brake module 142 receives park brake signals SPB from the mECU 120 and provides the park braking pressure pBPB.

The trailer control circuit 110 further has an electropneumatic trailer control module 1. For receiving braking signals SB the trailer control module 1 is connected to the mECU 120 via brake signal line 146. Furthermore, the trailer control module 1 is connected to the foot brake module 132 via redundancy line 148 for receiving a redundancy pressure pBR. In particular the redundancy line 148 is connected to a redundancy port 36 e.g. leading to park brake unit 142 of the trailer control module 1, or a hand brake unit respectively. In this embodiment the redundancy pressure pBR equals the front axle braking pressure pBFA. The protection line 144 may further be connected to said trailer control module 1.

The trailer control module 1 is further connected to a supply coupling head 150 and a control coupling head 152. According to SAE International's standard J318 the control coupling head 152 is usually referred to as blue coupling head while the supply coupling head 150 is referred to as red coupling head. The supply coupling head 150 is connected to a trailer supply port 4 of the trailer control module 1 for delivering a trailer supply pressure pTS to the trailer via the supply coupling head 150. The control coupling head 152 is connected to a trailer control working port 6 of the trailer control module 1 for providing a trailer control pressure pTC to the trailer via the control coupling head 152.

In this embodiment the trailer control module 1 comprises a first supply connection 2a fluidically connected to the first compressed air supply 112 via a first supply line 154. A second supply connection 2b of the trailer control module 1 is connected to the second compressed air supply 118 via a second supply line 156.

When the external control valve 114 is in an external supply state (in general a pushed position if the external control valve 114 is a push-pull valve), then air at supply pressure pS is preferably supplied to the protection line 144 from the first air supply 112 and/or the second compressed air supply 118 via the external control valve 114. In a closed state of the external control valve 114 (in general a pulled position) air flow from the first compressed air supply 112 and the second compressed air supply 118 to the control line 144 is preferably blocked by the external control valve 114. The external control valve 114 is further configured to switch from the external supply state to the closed state when a pressure in the protection line 144 drops below a predefined pressure level. If, for example, due to a failure in the protection line 144 or an unintended trailer breakaway, a pressure level in the protection line 144 drops below a the predefined pressure level, the external control valve 114 automatically blocks the fluid connection of the protection line 144 to the first compressed air supply 112 and the second compressed air supply 118 (the push-pull valve pops out) and thus the supply to the trailer control circuit 110 is blocked and a considerable pressure loss is detected at the trailer control working port 6.

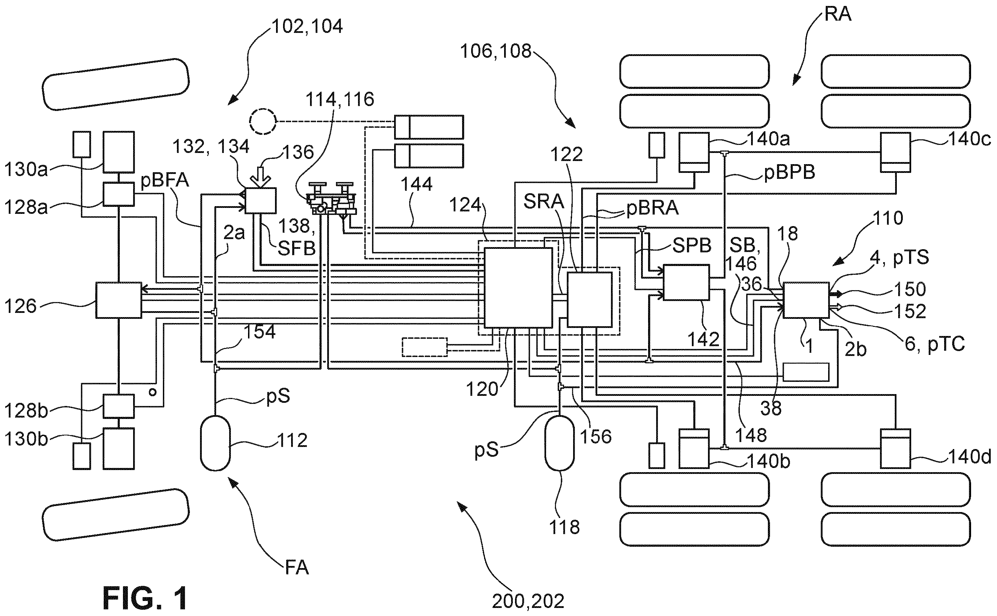

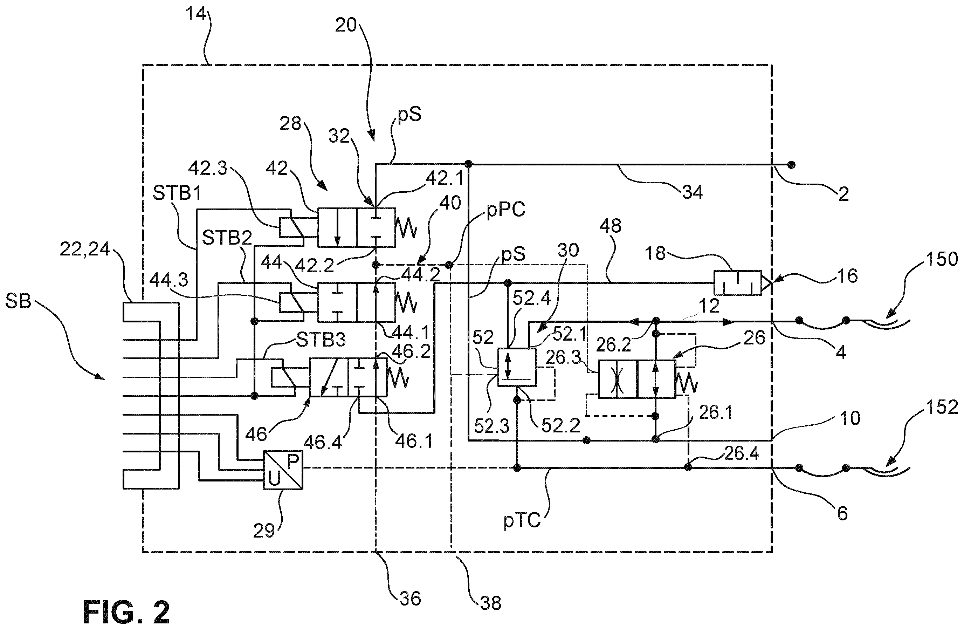

Figure 2 schematically shows an embodiment of the electropneumatic trailer control module 1 having the supply connection 2 that may be provided by the first supply connection and/or the second supply connection (see Fig. 1) connected to the supply lines 154, 156. As described above the trailer supply port 4 of the electropneumatic trailer control module 1 is connected to the supply coupling head 150 and the trailer control connection of the electropneumatic trailer control module 1 is connected to the control coupling head 152. The trailer supply connection 2 and the trailer control working port 6 to trailer control line, the trailer supply port 4, the redundancy port 36 and the parking brake pressure port 38 leading to the park brake unit 142 are arranged on a module valve unit casing 14 of the electropneumatic trailer control module 1. The module valve unit casing 14 further comprises an exhaust 16 connected to an exhaust silencer 18.

A trailer control valve arrangement 20 is arranged inside the module valve unit casing 14. Additionally the electropneumatic trailer control module 1 comprises an electronic trailer control connection 22 connected to the brake signal line 146 for receiving the braking signals SB. In this embodiment, the electronic trailer control connection 22 is formed as an electric connection strip 24 directly supplying trailer braking control signals STB to the trailer control valve arrangement. The electronic trailer control connection 22 is further connected to a pressure sensor 29 for receiving sensor signals SS and for providing the sensor signals SS to the mECU 120. The sensor 29 monitors the trailer control pressure delivered by the trailer control working port 6 and returns the signal to the main electronic control unit 120. However, the electronic trailer control connection 22 may also comprise an ECU for providing the trailer braking control signals STB and for receiving the sensor signals SS.

The trailer control valve arrangement 20 comprises an electropneumatic pilot control unit 28 and a pneumatically controlled relay valve unit 30. A control valve supply port 32 of the electropneumatic pilot control unit 28 is in direct fluid communication with the supply connections 2 via supply line 34. During normal operation supply pressure pS is provided to the control valve supply port 32.

The electronic braking signals SB determined by the main electronic control unit 120 is converted by the pilot valve arrangement 28 valve into pilot control pressure pPC for the relay valve unit 30. The trailer control pressure at the trailer control working port 6 is proportional to this pilot control pressure pPC.

If considerable pressure loss is detected at trailer control working port 6 (e.g. because the trailer brake line breaks away) during full braking, the breakaway valve arrangement 20 throttles the supply of the relay valve unit 30 in the trailer control module 1 via throttle port 10. This causes a pressure drop at trailer working port 6 and the breakaway valve unit 26 throttles the supply of supply pressure to the relay valve unit 30. Thereby a pressure drop at the trailer supply port 4 (trailer supply line) occurs and the relay valve arrangement 30 causes the trailer to be braked automatically within the legally stipulated time of no more than 2 seconds. Thus, unintentional disconnection of the trailer from the tractor causes the trailer to be braked automatically.

The electropneumatic pilot control unit 28 is configured to receive the supply pressure pS via the control valve supply port 32 and to provide a first pilot control pressure pPC at a pilot control working port 40 of the electropneumatic pilot control unit 28. The pilot control pressure pPC can be modulated by the electro-pneumatic pilot control unit 28 dependent on the trailer braking control signals STB provided by the electronic trailer control connection 22. For this purpose, the electropneumatic pilot control unit 28 comprises a first electropneumatic control valve 42 having a first electropneumatic supply port 42.1 and a first electropneumatic working port 42.2. In this embodiment, the first electropneumatic supply port 42.1 functions as the control valve supply port 32 while the first electropneumatic working port 42.2 is in direct fluid communication to the pilot control working port 40. The first electropneumatic control valve 42 is an electronically controlled 2/2-way valve biased in a closed position (shown in Fig. 2), wherein the first electropneumatic supply port 42.1 and the first electropneumatic working port 42.2 are separated. A first solenoid 42.3 of the first electro-pneumatic control valve 42 can be energized by the trailer braking control signals STB1 such that a modulated first pilot control pressure pPC can be provided at the first electropneumatic working port 42.2 by gradually opening or closing the first electropneumatic control valve 42.

The electropneumatic pilot control unit 28 further comprises a second electro-pneumatic control valve 44 and a third electropneumatic control valve 46 (bleed valve). The second electropneumatic control valve 44 is formed as an electro-pneumatic 2/2-way valve that is biased to a closed position connecting a second electropneumatic supply port 44.1 and a second electropneumatic working port 44.2 of the second electropneumatic control valve 44. When trailer braking control signals STB2 are provided to a second solenoid the second electro-pneumatic control valve 44 is closed and a fluid passage between the second ports 44.1, 44.2 is blocked. The second electropneumatic working port 44.2 is in fluid communication with the pilot control working port 40 while the second electropneumatic supply port 44.1 is connected to a third electropneumatic working port 46.2 of the third electropneumatic control valve 46. The third electropneumatic control valve 46 is formed as an electropneumatic 3/2-way valve. A third electropneumatic supply port 46.1 of the third electropneumatic control valve 46 may be connected to the redundancy port 36 for receiving a redundancy pressure pBR. A third exhaust port 46.4 of the third electropneumatic control valve 46 is connected to the exhaust 16. The third electropneumatic control valve 46 is biased in a supply position (shown in Fig. 2) when the third electropneumatic control valve 46 is de-energized. By providing trailer braking control signals STB to a third solenoid 46.3, the third electropneumatic control valve 46 can be switched to an exhaust position wherein the third electropneumatic working port 46.2 is connected to the exhaust 16.

In this embodiment, the electropneumatic pilot control unit 28 of the trailer control valve arrangement 20 comprises the first electropneumatic control valve 42, the second electropneumatic control valve 44 and the third electropneumatic control valve 46. However, in other embodiments the electropneumatic pilot control unit 28 may also comprise more or less than three control valves. For example, the electropneumatic pilot control unit 28 could only comprise the first electropneumatic control valve 42 and the third electropneumatic control valve 46.

For providing the first pilot control pressure pPC during normal operation, trailer braking control signals STB1, STB2 are provided and the electropneumatic pilot control unit 28 functions as follows: Upon reception of the trailer braking control signals STB 2 the second solenoid 44.3 switches the second electropneumatic control valve 44 from the open position shown in Fig. 2 to the closed position such that a fluid passage between the second electropneumatic supply port 44.1 to the second electropneumatic working port 44.2 and vice versa is blocked. The first electropneumatic control valve 42 receives supply pressure pS at its first electropneumatic supply port 42.1. Upon reception of the trailer braking control signals STB1 at the first solenoid 42.3, the first electropneumatic control valve 42 modulates the pressure such that the pilot control pressure pPC corresponding to the trailer braking control signal STB1 is supplied to the first electropneumatic working port 42.2 and (due to the direct fluidal connection) to the pilot control working port 40. In order to vent the pilot control working port 40, the first electropneumatic control valve 42 and the second electro-pneumatic control valve 44 are de-energized such that the first electropneumatic control valve 42 switches to the closed position shown in Fig. 2 and the second electropneumatic control valve 44 switches to the open position shown in Fig. 2. At the same time the third electropneumatic control valve 46 is energized by providing third trailer braking control signals STB3 to the third electropneumatic control valve 46 such that it switches from the supply position (shown in Fig. 2) to the exhaust position. The pilot control working port 40 is then fluidically connected to the exhaust 16 via the second electropneumatic control valve 44, the third electropneumatic control valve 46, an exhaust line 48 and the exhaust silencer 18.

The electropneumatic trailer control module 1 may further provide a fail-safe functionality. If no trailer braking control signals STB can be provided during an electrical failure, the electropneumatic control valves 42, 44, 46 of the electro-pneumatic pilot control unit 28 switch to the positions shown in Fig. 2. The first electropneumatic control valve 42 is closed while the second electropneumatic control valve 44 is open and the third electropneumatic control valve 46 is in the supply position wherein the third electropneumatic supply port 46.1 and the third electropneumatic working port 46.2 are in fluid communication. Redundancy pressure pBR may be provided to the redundancy port 36 and then supplied to the pilot control working port 40 via the third electropneumatic control valve 46 and the second electropneumatic control valve 44 while a fluid passage from the supply connections 2 is blocked by the first electropneumatic control valve 42.

The pilot control working port 40 is connected to the relay valve unit 30 via pilot control line 50. In this embodiment, the relay valve unit 30 consists of a pneumatic relay valve 52, wherein a control signal directed to a relay valve control port 52.3 of the relay valve 52 is a pneumatic control signal. However, it should be noted that the relay valve unit 30 may also comprise a valve of another valve type or additional valves. The pilot control pressure pPC provided by the electropneumatic pilot control unit 28 via the pilot control line 50 forms the control signal of the relay valve 52. The relay valve 52 further comprises a relay valve supply port 52.1, a relay valve working port 52.2 and a relay valve exhaust port 52.4. Supply pressure pS is provided to the relay valve supply port 52.1 via the supply connections 2, the supply line 34. The relay valve 52 modulates the supply pressure pS of compressed air supplied to the relay valve supply port 52.1 such that a trailer control pressure pTC provided at the relay valve working port 52.2 equals the pressure supplied to the relay valve control port 52.3backup pressure. It shall be understood that substantially no air flow occurs from the relay valve control port 52.3 to the relay valve working port 52.2. The pressure supplied to the relay valve control port 52.3 only controls the pressure level at the relay valve working port 52.2. Thus, if no compressed air is supplied to the relay valve supply port 52.1 and/or if the relay valve control port 52.3 is fluidically connected to the exhaust 16, no trailer control pressure pTC is supplied at the relay valve working port 52.2.

Pneumatic control of the relay valve unit 30 is affected by the redundancy pressure pBR of the redundancy port 36 (also referred as brake signal transmitter) and pressure provided at the parking brake pressure port 38.

In the case of electro-pneumatic control (supply state), a redundancy pressure pBR is retained by the third electropneumatic valve which may be a 3/2 backup solenoid valve and provided to a redundancy port 36. Without electronic control, the redundancy pressure pBR will not be retained.

When the pressure applied at the parking brake pressure port 38 is reduced, the pressure in the trailer control working port 6 will increase, irrespective of the electro-pneumatic and redundancy pressure pBR at the redundancy port 36. When the hand brake or parking brake pressure port 38 is completely exhausted, the trailer control pressure delivered at trailer control working port 6 amounts to a minimum of 7 bar (at a supply pressure of 8,5 bar).

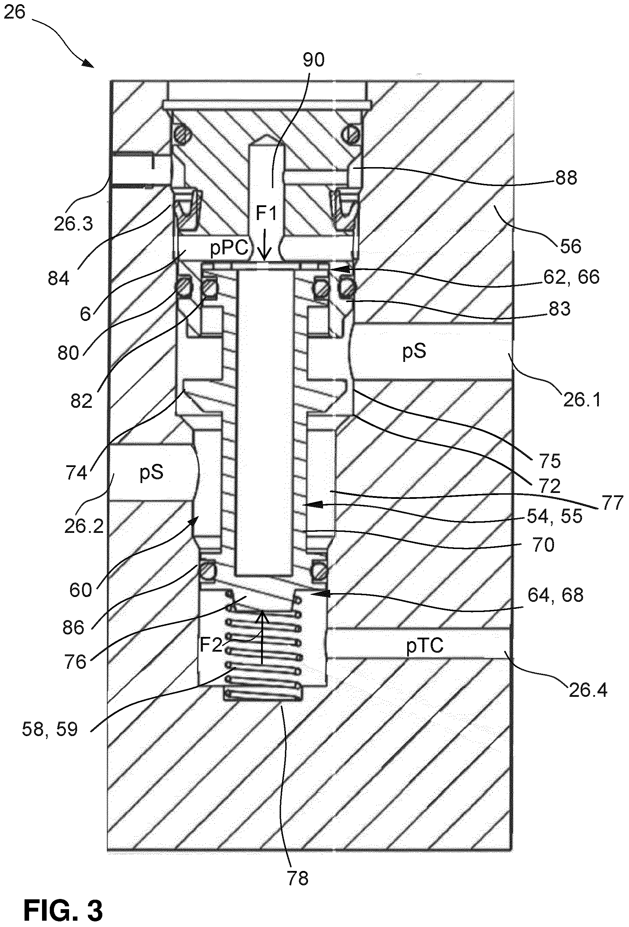

Fig. 3 shows the breakaway valve unit 26 in detail. The breakaway valve unit 26 has a breakaway valve supply port 26.1 for receiving supply pressure pS, a breakaway valve control port 26.3 for receiving pilot control pressure pPC and a breakaway valve working port 26.2 for providing the supply pressure pS to a relay valve unit 30 (see Fig. 2). The breakaway valve unit 26 further has a check port 26.4 in fluid communication with the trailer working port 6 (see Fig. 2) for receiving the trailer control pressure pTC.

The breakaway valve unit 26 comprises a switching member 54 which is formed as a piston 55. The piston 55 is arranged in a valve unit casing 56 of the breakaway valve unit 26. A flow path 60 is provided between the breakaway valve supply port 26.1 and the breakaway valve working port 26.2. The piston 55 is arranged within the flow path 60.

A resilient member 58 which is formed as a spring 59 is provided in the valve unit casing 56 and configured to bias the piston 55 toward a supply state in which the breakaway valve supply port 26.1 is in fluid communication with the breakaway valve working port 26.2 such that pressurized air can freely flow around the piston 55.

The piston 55 has a first control face 62 and an opposing second control face 64. The first control face 62 is exposed to the pilot control pressure pPC and the second control face 64 is exposed to the trailer control pressure pTC. A first pressure force F1 defined by the pilot control pressure pPC acts on the first control face 62. A second pressure force F2 defined by the trailer control pressure pTC and the retention force of the spring 59 acts on the second control face 64.

The first control face 62 is provided by a first end 66 of the piston 55. The second control face 64 is provided by a second opposing end 68 of the piston 55. A central portion 70 is provided between the first end 66 and the second end 68. Pressurized air can freely flow around the central portion 70 in the supply state as shown in Fig. 3.

The valve unit casing 56 has a valve seat 72 and the piston 55 has a corresponding valve body 74 which is provided by a projection extending toward an internal wall 75 of the valve unit casing 56 in a radial direction.

The internal wall 75 defines a receiving chamber 77 configured to receive and guide the piston 55.

In case of the second pressure force F2 falling below a predetermined threshold TB, meaning that the second pressure force F2 decreases due to a pressure drop at the trailer working port 6 (see Fig. 2) and in consequence at the check port 26.4, the first pressure force F1 advances the piston 55 toward a breakaway state in which the valve body 74 rests against the valve seat 72. As a result, the supply of supply pressure pS from the supply connection 2 to the relay valve unit 30 via the breakaway valve unit 26 (see Fig. 2) is at least throttled.

The breakaway valve unit 26 further has a protrusion 76 provided at the second end 68 of the piston 55 configured for engagement with the spring 59 such that the retention force applied by the spring 59 is directed in the axial direction toward the center of the piston 55. Further, the valve unit casing 56 has a recess 78 corresponding to the spring 59 and configured for at least partly receiving the spring 59 in order to guide the movement of the spring 59 between the supply state and the breakaway state.

For the fluid-tight separation of the first control face 62 and the second control face 64, the breakaway valve unit 26 comprises a first sealing ring 80 and a second sealing ring 82 arranged proximate to the first end 66 of the piston 55. The piston 55 is at least partly guided by a plug 83 received within the receiving chamber 77 defined by the internal wall 75. The first sealing ring 80 is arranged between the plug 83 and the internal wall 75. The second sealing ring 82 is arranged between the piston 55 and the plug 83. The breakaway valve unit 26 further comprises a lid sealing 84 arranged between the breakaway valve unit control port 26.3 and the piston 55.

A further sealing ring is provided proximate to the second end 68 of the piston 55 for fluid-tightly separating the second control face 64 and the flow path 60.

The breakaway valve unit 26 further has an annular passage 88 connected to the breakaway valve working port 26.2 and a pressure passage 90 connected to said annular passage 88. The pressure passage 90 is configured to guide the pilot control pressure pPC to the first control face 62.

### List of reference signs (part of the description)

- 1: electropneumatic trailer control module
- 2: supply connection
- 4: trailer supply port
- 6: trailer control working port to trailer control connection
- 10: throttle port
- 14: module valve unit casing
- 16: exhaust
- 18: exhaust silencer
- 20: trailer control valve arrangement
- 22: electronic trailer control connection
- 24: electric connection strip
- 26: breakaway valve unit
- 26.1: breakaway valve supply port
- 26.2: breakaway valve working port
- 26.3: breakaway valve control port
- 26.4: check port
- 28: electropneumatic pilot control unit
- 29: pressure sensor
- 30: relay valve unit
- 32: electropneumatic pilot control unit supply port
- 34: supply lines
- 36: redundancy port (brake signal transmitter)
- 38: parking brake pressure port
- 40: electropneumatic pilot control unit working port
- 42: first electropneumatic control valve
- 42.1: first electropneumatic supply port
- 42.2: first electropneumatic working port
- 42.3: first solenoid
- 44: second electropneumatic control valve
- 44.1: second electropneumatic supply port
- 44.2: second electropneumatic working port
- 44.3: second solenoid
- 46: third electropneumatic control valve
- 46.1: third electropneumatic supply port
- 46.2: third electropneumatic working port
- 46.3: third solenoid
- 46.4: third exhaust port
- 48: exhaust line
- 50: pilot control line
- 52: relay valve
- 52.1: relay valve supply port
- 52.2: relay valve working port
- 52.3: relay valve control port
- 52.4: relay valve exhaust port
- 54: switching member
- 55: piston
- 56: valve unit casing
- 58: resilient member
- 59: spring
- 60: flow path
- 62: first control face
- 64: second control face
- 66: first end
- 68: second end
- 70: central portion
- 72: valve seat
- 74: valve body
- 75: internal wall
- 76: protrusion
- 77: receiving chamber
- 78: recess
- 80: first sealing ring
- 82: second sealing ring
- 83: plug
- 84: lip sealing
- 86: third sealing
- 88: annular passage
- 90: pressure passage
- 100: electropneumatic braking system
- 102: first brake circuit
- 104: front axle brake circuit
- 106: second brake circuit
- 108: rear axle brake circuit
- 110: trailer control circuit
- 112: first compressed air supply
- 114: external control valve
- 116: dash valve
- 118: second compressed air supply
- 120: main electronic control unit (mECU)
- 122: rear axle modulator
- 124: control unit
- 126: front axle modulator
- 128a, b: front axle ABS-modules
- 130a, b: front axle brake actuators
- 132: foot brake module
- 134: electropneumatic foot brake module
- 136: arrow
- 138: foot brake signal line
- 140a, b, c, d: rear axle brake actuators
- 142: park brake module
- 144: protection line
- 146: brake signal line
- 148: redundancy line
- 150: supply coupling head
- 152: control coupling head.
- 154: fist supply line
- 156: second supply line
- 200: tractor vehicle
- 202: commercial vehicle
- 300: method
- FA: front axle
- RA: rear axle
- pB: braking pressure
- pBFA: front axle braking pressure
- pBPB: park braking pressure
- pBR: redundancy pressure
- pBRA: rear axle braking pressure
- pTC: trailer control pressure
- pTS: trailer supply pressure
- pPC: first pilot control pressure
- pS: supply pressure
- SFB: foot brake signals
- SPB: park brake signals
- SRA: rear axle brake signals
- SB: electronic braking signals
- S1, S2, S3, etc.: steps
- SS: sensor signals
- STB: trailer braking control signals

## Claims

1. A trailer control module (1) for an electropneumatic braking system (100) of a tractor vehicle (200) / trailer combination, in particular commercial vehicle combination, the trailer control module (1) comprising:
- a supply connection (2) for providing a supply pressure (pS),
- a trailer supply port (4) for delivering a trailer supply pressure (pTS) to a trailer supply connection (150),
- a trailer working port (6) for delivering a trailer control pressure (pTC) to a trailer control connection (152), and
- a trailer control valve arrangement (20) at least connected to the supply connection (2) and configured for receiving the supply pressure (pS) and for providing the trailer control pressure (pTC) to the trailer working port (6), wherein the trailer control valve arrangement (20) comprises
an electropneumatic pilot control unit (28) for receiving electronic trailer braking signals (STB) and transforming the electronic trailer braking signals (STB) into a pilot control pressure (pPC),
a relay valve unit (30) for receiving the supply pressure (pS) and the pilot control pressure (pPC) and for providing the trailer control pressure (pTC) dependent on the pilot control pressure (pPC), and
a breakaway valve unit (26) configured to switch between a supply state for enabling fluid communication of the supply connection (2) and the relay valve unit (30) and a breakaway state for preventing or throttling fluid communication of the supply connection (2) and the relay valve unit (30),
**characterized in that** the breakaway valve unit (26) includes a switching member (54) having a first control face (62) subjected to a first pressure force (F1) defined by at least the pilot control pressure (pPC) and a second control face (64) subjected to a second pressure force (F2) counteracting the first pressure force (F1) and defined by at least the trailer control pressure (pTC), wherein the first pressure force (F1) and the second pressure force (F2) are balanced in the supply state and the switching member (54) is configured to switch from the supply state to the breakaway state, in case of the second pressure force (F2) falling below a predetermined threshold (TB).

2. The trailer control module (1) according to claim 1, further comprising:
- a throttling port (10) in fluid connection with the breakaway valve unit (26),
wherein the breakaway valve unit (26) throttles the supply of supply pressure (pS) to the relay valve (30) in the breakaway state via the throttling port (10).

3. The trailer control module (1) according to any one of the preceding claims,
wherein the breakaway valve unit (26) further has a resilient member (58) configured to apply a retention force to the second control face (64), the pressure force (F1) being defined by the pilot control pressure (pPC) and the retention force.

4. The trailer control module (1) according to any one of the preceding claims,
wherein the breakaway valve unit (26) has a valve unit casing (56) at least partly defining a flow path (60) from the supply connection (2) to the relay valve unit (30), and the switching member (54) being movable received in the valve unit casing (56) for switching from the supply state to the breakaway state,
wherein the switching member (54) is arranged in the flow path (60) and configured for selectively blocking the flow path (60) in the breakaway state.

5. The trailer control module (1) according to claim 4,
wherein the switching member (54) is a piston (55) slidably arranged in the valve unit casing (56), wherein the first control face (62) is provided by a first end (66) of the piston (55) and the second control face (64) is provided by a second opposing end (68) of the piston (55),
wherein the piston (55) further has a central portion (70) arranged in the flow path (60).

6. The trailer control module (1) according to any one of the claims 4 or 5, wherein the breakaway valve unit casing (56) has a valve seat (72) and the central portion (70) has a corresponding valve body (74), the valve body (74) being configured to rest against the valve seat (72) in the breakaway state.

7. The trailer control module (1) according to any one of the claims 4 to 6, the valve unit casing (56) having:
- a breakaway valve supply port (26.1) for receiving supply pressure (pS) from the supply connection (2),
- a breakaway valve control port (26.3) for receiving the pilot control pressure (pPC) from the pilot valve unit (28),
- a breakaway valve working port (26.2) for providing supply pressure (pS) in the supply state to the relay valve unit (30), and
- a check port (26.4) in fluid connection with the trailer working port (6) for receiving the trailer control pressure (pTC).

8. The trailer control module (1) according to any one of the claims 4 to 7, wherein the resilient member (58) is a spring (59) engaged with a corresponding protrusion (76) of the second control face (64) and a corresponding recess (78) of the valve unit casing (56).

9. The trailer control module (1) according to any one of the preceding claims,
wherein the first control face (62) is fluid-tightly separated from the second control face (64) by at least one sealing ring (80, 82, 86).

10. The trailer control module (1) according to any one of the preceding claims,
wherein the electropneumatic pilot control unit (28) is configured for signal communication with an electronic control unit (120) of an electronic braking system (100) for receiving the electronic trailer braking signals (STB).

11. The trailer control module (1) according to claim 11, further comprising:
- a pressure sensor (29) configured to monitor the trailer control pressure (pTC) and to provide a pressure signal to the electronic control unit (120).

12. The trailer control module (1) according to any one of the preceding claims,
wherein the electropneumatic pilot control unit (28) comprises a first electro-pneumatic control valve (42), preferably a 2/2 inlet valve, a second electro-pneumatic control valve (44), preferably a 2/2 outlet valve, and a third electro-pneumatic control valve (48), preferably a 3/2 backup valve.

13. The trailer control module (1) according to any one of the preceding claims, further comprising:
- an electronic trailer control connection (24) for receiving electronic braking signals (SB) and providing respective trailer braking signals (STB) at the trailer control valve arrangement (26) such that the trailer control pressure (pTC) can be modulated.

14. An electropneumatic braking system (100) for a tractor vehicle (200) of a tractor vehicle / trailer combination, in particular a commercial vehicle combination, comprising:
- at least a first brake circuit (102) including brake actuators (130a, 130b, 140a, 140b, 140c, 140d) for braking the tractor vehicle (200),
one or more compressed air supplies (112, 118), and
- a trailer control circuit (110) comprising a supply coupling head (150), a control coupling head (152) and an trailer control module (1) according to any one of the claims 1 to 13.

15. A method for controlling a breakaway function of an electropneumatic braking system (100) according to claim 14, comprising the steps of:
- supplying the supply pressure (pS) by the supply connection (2) of the trailer control module (1) to the electropneumatic trailer control valve arrangement (20) of the trailer control module (1);
- receiving the electronic trailer braking signals (STB) at the electropneumatic pilot control unit (28) of the trailer control module (1);
- transforming the electronic trailer braking signals (STB) into the pilot control pressure (pPC) by the electropneumatic pilot control unit (28);
- providing the trailer control pressure (pTC) to the trailer working port (6) of the trailer control module (1) dependent on the pilot control pressure (pPC) by the relay valve unit (30) of the trailer control module (1);
- receiving the supply pressure (pS), the pilot control pressure (pPC) and the trailer control pressure (pTC) at the breakaway valve unit (26) of the trailer control module (1);
- switching the breakaway valve unit (26) between the supply state and the breakaway state,
wherein the switching member (54) switches from the supply state to the breakaway state, in case of the second pressure force (F2) falling below a predetermined threshold (TB).

## Patentansprüche

1. Anhängersteuermodul (1) für ein elektropneumatisches Bremssystem (100) eines Zugfahrzeug- (200)/Anhängergespanns, insbesondere eines Nutzfahrzeuggespanns, das Anhängersteuermodul (1) umfassend:
- eine Vorratsverbindung (2) zum Bereitstellen eines Vorratsdrucks (pS),
- einen Anhängervorratsanschluss (4) zum Abgeben eines Anhängervorratsdrucks (pTS) an eine Anhängervorratsverbindung (150),
- einen Anhängerarbeitsanschluss (6) zum Abgeben eines Anhängersteuerdrucks (pTC) an eine Anhängersteuerverbindung (152) und
- eine Anhängersteuerventilanordnung (20), die mindestens mit der Vorratsverbindung (2) verbunden und zum Aufnehmen des Vorratsdrucks (pS) und zum Bereitstellen des Anhängersteuerdrucks (pTC) an den Anhängerarbeitsanschluss (6) konfiguriert ist, wobei die Anhängersteuerventilanordnung (20) umfasst
eine elektropneumatische Vorsteuereinheit (28) zum Aufnehmen elektronischer Anhängerbremssignale (STB) und Umwandeln der elektronischen Anhängerbremssignale (STB) in einen Vorsteuerdruck (pPC),
eine Relaisventileinheit (30) zum Aufnehmen des Vorratsdrucks (pS) und des Vorsteuerdrucks (pPC) und zum Bereitstellen des Anhängersteuerdrucks (pTC) in Abhängigkeit von dem Vorsteuerdruck (pPC) und
eine Abreißventileinheit (26), die konfiguriert ist, um zwischen einem Vorratszustand zum Ermöglichen einer Fluidkommunikation der Vorratsverbindung (2) und der Relaisventileinheit (30) und einem Abreißzustand zum Verhindern oder Drosseln der Fluidkommunikation der Vorratsverbindung (2) und der Relaisventileinheit (30) umzuschalten,
**dadurch gekennzeichnet, dass** die Abreißventileinheit (26) ein Schaltelement (54) einschließt, das eine erste Steuerfläche (62), die einer ersten Druckkraft (F1) ausgesetzt wird, die durch mindestens den Vorsteuerdruck (pPC) definiert ist, und eine zweite Steuerfläche (64) aufweist, die einer zweiten Druckkraft (F2) ausgesetzt wird, die der ersten Druckkraft (F1) entgegenwirkt und durch mindestens den Anhängersteuerdruck (pTC) definiert ist, wobei die erste Druckkraft (F1) und die zweite Druckkraft (F2) in dem Vorratszustand im Gleichgewicht sind und das Schaltelement (54) konfiguriert ist, um von dem Vorratszustand in den Abreißzustand umzuschalten, falls die zweite Druckkraft (F2) einen zuvor bestimmten Schwellenwert (TB) unterschreitet.

2. Anhängersteuermodul (1) nach Anspruch 1, ferner umfassend:
- einen Drosselanschluss (10) in Fluidverbindung mit der Abreißventileinheit (26),
wobei die Abreißventileinheit (26) die Zufuhr von Vorratsdruck (pS) zu dem Relaisventil (30) in dem Abreißzustand über den Drosselanschluss (10) drosselt.

3. Anhängersteuermodul (1) nach einem der vorstehenden Ansprüche,
wobei die Abreißventileinheit (26) ferner ein elastisches Element (58) aufweist, das konfiguriert ist, um eine Haltekraft auf die zweite Steuerfläche (64) auszuüben, wobei die Druckkraft (F1) durch den Vorsteuerdruck (pPC) und die Haltekraft definiert ist.

4. Anhängersteuermodul (1) nach einem der vorstehenden Ansprüche,
wobei die Abreißventileinheit (26) ein Ventileinheitsgehäuse (56) aufweist, das mindestens teilweise einen Strömungsweg (60) von der Vorratsverbindung (2) zu der Relaisventileinheit (30) definiert, und das Schaltelement (54) zum Umschalten von dem Vorratszustand in den Abreißzustand in dem Ventileinheitsgehäuse (56) bewegbar aufgenommen ist,
wobei das Schaltelement (54) in dem Strömungsweg (60) angeordnet und zum selektiven Blockieren des Strömungswegs (60) in dem Abreißzustand konfiguriert ist.

5. Anhängersteuermodul (1) nach Anspruch 4,
wobei das Schaltelement (54) ein Kolben (55) ist, der in dem Ventileinheitsgehäuse (56) verschiebbar angeordnet ist, wobei die erste Steuerfläche (62) durch ein erstes Ende (66) des Kolbens (55) bereitgestellt ist und die zweite Steuerfläche (64) durch ein zweites, gegenüberliegendes Ende (68) des Kolbens (55) bereitgestellt ist,
wobei der Kolben (55) ferner einen Mittelabschnitt (70) aufweist, der in dem Strömungsweg (60) angeordnet ist.

6. Anhängersteuermodul (1) nach einem der Ansprüche 4 oder 5, wobei das Abreißventileinheitsgehäuse (56) einen Ventilsitz (72) aufweist und der Mittelabschnitt (70) einen entsprechenden Ventilkörper (74) aufweist, wobei der Ventilkörper (74) konfiguriert ist, um in dem Abreißzustand an dem Ventilsitz (72) anzuliegen.

7. Anhängersteuermodul (1) nach einem der Ansprüche 4 bis 6, wobei das Ventileinheitsgehäuse (56) aufweist:
- einen Abreißventilvorratsanschluss (26.1) zum Aufnehmen von Vorratsdruck (pS) von der Vorratsverbindung (2),
- einen Abreißventilsteueranschluss (26.3) zum Aufnehmen des Vorsteuerdrucks (pPC) von der Vorsteuerventileinheit (28),
- einen Abreißventilarbeitsanschluss (26.2) zum Bereitstellen von Vorratsdruck (pS) in dem Vorratszustand an die Relaisventileinheit (30) und
- einen Rückschlaganschluss (26.4) in Fluidverbindung mit dem Anhängerarbeitsanschluss (6) zum Aufnehmen des Anhängersteuerdrucks (pTC).

8. Anhängersteuermodul (1) nach einem der Ansprüche 4 bis 7, wobei das elastische Element (58) eine Feder (59) ist, die mit einem entsprechenden Vorsprung (76) der zweiten Steuerfläche (64) und einer entsprechenden Aussparung (78) des Ventileinheitsgehäuses (56) in Eingriff steht.

9. Anhängersteuermodul (1) nach einem der vorstehenden Ansprüche, wobei die erste Steuerfläche (62) durch mindestens einen Dichtring (80, 82, 86) von der zweiten Steuerfläche (64) fluiddicht getrennt ist.

10. Anhängersteuermodul (1) nach einem der vorstehenden Ansprüche,
wobei die elektropneumatische Vorsteuereinheit (28) für eine Signalkommunikation mit einer elektronischen Steuereinheit (120) eines elektronischen Bremssystems (100) zum Aufnehmen der elektronischen Anhängerbremssignale (STB) konfiguriert ist.

11. Anhängersteuermodul (1) nach Anspruch 11, ferner umfassend:
- einen Drucksensor (29), der konfiguriert ist, um den Anhängersteuerdruck (pTC) zu überwachen und um ein Drucksignal an die elektronische Steuereinheit (120) bereitzustellen.

12. Anhängersteuermodul (1) nach einem der vorstehenden Ansprüche,
wobei die elektropneumatische Vorsteuereinheit (28) ein erstes elektropneumatisches Steuerventil (42), vorzugsweise ein 2/2-Einlassventil, ein zweites elektropneumatisches Steuerventil (44), vorzugsweise ein 2/2-Auslassventil, und ein drittes elektropneumatisches Steuerventil (48), vorzugsweise ein 3/2-Rückhalteventil, umfasst.

13. Anhängersteuermodul (1) nach einem der vorstehenden Ansprüche, ferner umfassend:
- eine elektronische Anhängersteuerverbindung (24) zum Aufnehmen elektronischer Bremssignale (SB) und Bereitstellen jeweiliger Anhängerbremssignale (STB) an der Anhängersteuerventilanordnung (26), sodass der Anhängersteuerdruck (pTC) moduliert werden kann.

14. Elektropneumatisches Bremssystem (100) für ein Zugfahrzeug (200) eines Zugfahrzeug- /Anhängergespanns, insbesondere eines Nutzfahrzeuggespanns, umfassend:
- mindestens einen ersten Bremskreis (102), einschließlich Bremsaktuatoren (130a, 130b, 140a, 140b, 140c, 140d) zum Abbremsen des Zugfahrzeugs (200), eine oder mehrere Druckluftvorräte (112, 118) und
- einen Anhängersteuerkreis (110), umfassend einen Vorratskupplungskopf (150), einen Steuerkupplungskopf (152) und ein Anhängersteuermodul (1) nach einem der Ansprüche 1 bis 13.

15. Verfahren zum Steuern einer Abreißfunktion eines elektropneumatischen Bremssystems (100) nach Anspruch 14, umfassend die Schritte:
- Zuführen des Vorratsdrucks (pS) durch die Vorratsverbindung (2) des Anhängersteuermoduls (1) zu der elektropneumatischen Anhängersteuerventilanordnung (20) des Anhängersteuermoduls (1);
- Aufnehmen der elektronischen Anhängerbremssignale (STB) an der elektropneumatischen Vorsteuereinheit (28) des Anhängersteuermoduls (1);
- Umwandeln der elektronischen Anhängerbremssignale (STB) in den Vorsteuerdruck (pPC) durch die elektropneumatische Vorsteuereinheit (28);
- Bereitstellen des Anhängersteuerdrucks (pTC) an den Anhängerarbeitsanschluss (6) des Anhängersteuermoduls (1) in Abhängigkeit von dem Vorsteuerdruck (pPC) durch die Relaisventileinheit (30) des Anhängersteuermoduls (1);
- Aufnehmen des Vorratsdrucks (pS), des Vorsteuerdrucks (pPC) und des Anhängersteuerdrucks (pTC) an der Abreißventileinheit (26) des Anhängersteuermoduls (1);
- Umschalten der Abreißventileinheit (26) zwischen dem Vorratszustand und dem Abreißzustand,
wobei das Schaltelement (54) von dem Vorratszustand in den Abreißzustand umschaltet, falls die zweite Druckkraft (F2) einen zuvor bestimmten Schwellenwert (TB) unterschreitet.

## Revendications

1. Module de commande de remorque (1) pour un système de freinage électropneumatique (100) d'une combinaison de véhicule tracteur (200) / remorque, en particulier d'une combinaison de véhicules commerciaux, le module de commande de remorque (1) comprenant :
- un raccord d'alimentation (2) destiné à fournir une pression d'alimentation (pS) ;
- un orifice d'alimentation de remorque (4) destiné à distribuer une pression d'alimentation de remorque (pTS) à un raccord d'alimentation de remorque (150),
- un orifice de travail de remorque (6) destiné à distribuer une pression de commande de remorque (pTC) à un raccord de commande de remorque (152), et
- un agencement de valve de commande de remorque (20) au moins relié au raccord d'alimentation (2) et conçu pour recevoir la pression d'alimentation (pS) et pour fournir la pression de commande de remorque (pTC) à l'orifice de travail de remorque (6), dans lequel l'agencement de valve de commande de remorque (20) comprend
une unité de commande pilote électropneumatique (28) destinée à recevoir des signaux de freinage de remorque (STB) électronique et à transformer les signaux de freinage de remorque (STB) électronique en une pression de commande pilote (pPC),
une unité de valve relais (30) destinée à recevoir la pression d'alimentation (pS) et la pression de commande pilote (pPC) et à fournir la pression de commande de remorque (pTC) en fonction de la pression de commande pilote (pPC), et
une unité de valve de rupture (26) conçue pour commuter entre un état d'alimentation pour permettre une communication fluidique entre le raccord d'alimentation (2) et l'unité de valve relais (30) et un état de rupture pour empêcher ou limiter une communication fluidique entre le raccord d'alimentation (2) et l'unité de valve relais (30),
**caractérisé en ce que** l'unité de valve de rupture (26) comporte un élément de commutation (54) ayant une première face de commande (62) soumise à une première force de pression (F1) définie par au moins la pression de commande pilote (pPC) et une seconde face de commande (64) soumise à une seconde force de pression (F2) s'opposant à la première force de pression (F1) et définie par au moins la pression de commande de remorque (pTC), dans lequel la première force de pression (F1) et la seconde force de pression (F2) sont équilibrées dans l'état d'alimentation et l'élément de commutation (54) est conçu pour passer de l'état d'alimentation à l'état de rupture, dans le cas où la seconde force de pression (F2) tombe en dessous d'un seuil prédéterminé (TB).

2. Module de commande de remorque (1) selon la revendication 1, comprenant en outre :
- un orifice d'étranglement (10) en liaison fluidique avec l'unité de valve de rupture (26),
dans lequel l'unité de valve de rupture (26) limite la fourniture d'une pression d'alimentation (pS) à la valve relais (30) dans l'état de rupture par l'intermédiaire de l'orifice d'étranglement (10).

3. Module de commande de remorque (1) selon l'une quelconque des revendications précédentes,
dans lequel l'unité de valve de rupture (26) a en outre un élément élastique (58) conçu pour appliquer une force de rétention à la seconde face de commande (64), la force de pression (F1) étant définie par la pression de commande pilote (pPC) et la force de rétention.

4. Module de commande de remorque (1) selon l'une quelconque des revendications précédentes,
dans lequel l'unité de valve de rupture (26) a un boîtier d'unité de valve (56) définissant au moins partiellement un trajet d'écoulement (60) à partir du raccord d'alimentation (2) vers l'unité de valve relais (30), et l'élément de commutation (54) étant reçu de manière mobile dans le boîtier d'unité de valve (56) pour passer de l'état d'alimentation à l'état de rupture,
dans lequel l'élément de commutation (54) est disposé dans le trajet d'écoulement (60) et conçu pour bloquer sélectivement le trajet d'écoulement (60) dans l'état de rupture.

5. Module de commande de remorque (1) selon la revendication 4,
dans lequel l'élément de commutation (54) est un piston (55) disposé de manière coulissante dans le boîtier d'unité de valve (56), dans lequel la première face de commande (62) est fournie par une première extrémité (66) du piston (55) et la seconde face de commande (64) est fournie par une seconde extrémité (68) opposée du piston (55),
dans lequel le piston (55) a en outre une partie centrale (70) disposée dans le trajet d'écoulement (60).

6. Module de commande de remorque (1) selon l'une quelconque des revendications 4 ou 5, dans lequel le boîtier d'unité de valve (56) de rupture a un siège de valve (72) et la partie centrale (70) a un corps de valve (74) correspondant, le corps de valve (74) étant conçu pour s'appuyer contre le siège de valve (72) dans l'état de rupture.

7. Module de commande de remorque (1) selon l'une quelconque des revendications 4 à 6, le boîtier d'unité de valve (56) ayant :
- un orifice d'alimentation de valve de rupture (26.1) destiné à recevoir une pression d'alimentation (pS) à partir du raccord d'alimentation (2),
- un orifice de commande de valve de rupture (26.3) destiné à recevoir la pression de commande pilote (pPC) à partir de l'unité de valve pilote (28),
- un orifice de travail de valve de rupture (26.2) destiné à fournir une pression d'alimentation (pS) dans l'état d'alimentation à l'unité de valve relais (30), et
- un orifice de vérification (26.4) en liaison fluidique avec l'orifice de travail de remorque (6) destiné à recevoir la pression de commande de remorque (pTC).

8. Module de commande de remorque (1) selon l'une quelconque des revendications 4 à 7, dans lequel l'élément élastique (58) est un ressort (59) en prise avec une saillie (76) correspondante de la seconde face de commande (64) et avec un évidement (78) correspondant du boîtier d'unité de valve (56).

9. Module de commande de remorque (1) selon l'une quelconque des revendications précédentes,
dans lequel la première face de commande (62) est séparée de manière étanche aux fluides de la seconde face de commande (64) par au moins un anneau d'étanchéité (80, 82, 86).

10. Module de commande de remorque (1) selon l'une quelconque des revendications précédentes,
dans lequel l'unité de commande pilote électropneumatique (28) est configurée pour la communication de signal avec une unité de commande électronique (120) d'un système de freinage électronique (100) pour recevoir des signaux de freinage de remorque (STB) électronique.

11. Module de commande de remorque (1) selon la revendication 11, comprenant en outre :
- un capteur de pression (29) configuré pour surveiller la pression de commande de remorque (pTC) et pour fournir un signal de pression à l'unité de commande électronique (120).

12. Module de commande de remorque (1) selon l'une quelconque des revendications précédentes,
dans lequel l'unité de commande pilote électropneumatique (28) comprend une première valve de commande électropneumatique (42), de préférence une valve d'entrée 2/2, une deuxième valve de commande électropneumatique (44), de préférence une valve de sortie 2/2, et une troisième valve de commande électropneumatique (48), de préférence une valve de secours 3/2.

13. Module de commande de remorque (1) selon l'une quelconque des revendications précédentes, comprenant en outre :
- un raccord de commande de remorque électronique (24) destiné à recevoir des signaux de freinage électronique (SB) et fournir des signaux de freinage de remorque (STB) respectifs au niveau de l'agencement de valve de commande de remorque (26) de sorte que la pression de commande de remorque (pTC) puisse être modulée.

14. Système de freinage électropneumatique (100) pour un véhicule tracteur (200) d'une combinaison de véhicule tracteur / remorque, en particulier d'une combinaison de véhicules commerciaux, comprenant :
- au moins un premier circuit de freinage (102) comportant des actionneurs de freinage (130a, 130b, 140a, 140b, 140c, 140d) destinés à freiner le véhicule tracteur (200), une ou plusieurs alimentations en air comprimé (112, 118), et
- un circuit de commande de remorque (110) comprenant une tête d'accouplement d'alimentation (150), une tête d'accouplement de commande (152) et un module de commande de remorque (1) selon l'une quelconque des revendications 1 à 13.

15. Procédé destiné à commander une fonction de rupture d'un système de freinage électropneumatique (100) selon la revendication 14, comprenant les étapes suivantes consistant à :
- fournir la pression d'alimentation (pS) par le raccord d'alimentation (2) du module de commande de remorque (1) à l'agencement de valve de commande de remorque (20) du module de commande de remorque (1) ;
- recevoir des signaux de freinage de remorque (STB) électronique au niveau de l'unité de commande pilote électropneumatique (28) du module de commande de remorque (1) ;
- transformer les signaux de freinage de remorque (STB) électronique en pression de commande pilote (pPC) par l'unité de commande pilote électropneumatique (28) ;
- fournir la pression de commande de remorque (pTC) à l'orifice de travail de remorque (6) du module de commande de remorque (1) en fonction de la pression de commande pilote (pPC) par l'unité de valve relais (30) du module de commande de remorque (1) ;
- recevoir la pression d'alimentation (pS), la pression de commande pilote (pPC) et la pression de commande de remorque (pTC) au niveau de l'unité de valve de rupture (26) du module de commande de remorque (1) ;
- commuter l'unité de valve de rupture (26) entre l'état d'alimentation et l'état de rupture,
dans lequel l'élément de commutation (54) passe de l'état d'alimentation à l'état de rupture, dans le cas où la seconde force de pression (F2) tombe en dessous d'un seuil prédéterminé (TB).
